(19) Europäisches Patentamt

European Patent Office

Office européen des brevets

(11) **EP 1 542 941 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(21) Anmeldenummer: **03797284.1**

(22) Anmeldetag: **08.09.2003**

(51) Int Cl.:
***C04B 38/00*** (2006.01)

(86) Internationale Anmeldenummer:
**PCT/EP2003/009943**

(87) Internationale Veröffentlichungsnummer:
**WO 2004/026792 (01.04.2004 Gazette 2004/14)**

(54) **VORWIEGEND AUS KOHLENSTOFF ZUSAMMENGESETZTE SCHAUMSTOFFE HOHER INNERER OBERFLÄCHE UND VERFAHREN ZU DEREN HERSTELLUNG**

FOAM MATERIAL CONSISTING PREDOMINANTLY OF CARBON HAVING A HIGH INNER SURFACE AND METHOD FOR THE PRODUCTION THEREOF

MOUSSES CONSTITUEES PRINCIPALEMENT DE CARBONE ET PRESENTANT UNE GRANDE SURFACE INTERIEURE, ET LEUR PROCEDE DE FABRICATION

(84) Benannte Vertragsstaaten:
**AT BE BG CH CY CZ DE DK EE ES FI FR GB GR HU IE IT LI LU MC NL PT RO SE SI SK TR**

(30) Priorität: **17.09.2002 DE 10243240**

(43) Veröffentlichungstag der Anmeldung:
**22.06.2005 Patentblatt 2005/25**

(73) Patentinhaber: **BASF Aktiengesellschaft**
**67056 Ludwigshafen (DE)**

(72) Erfinder:
• ROTERMUND, Udo
  01990 Ortrand (DE)
• HEMPEL, Renate
  01945 Ruhland (DE)
• HESSE, Michael
  67549 Worms (DE)
• RUDLOFF, Jan
  01127 Dresden (DE)
• DESSEIX, Maryline
  B-5100 Jambes (BE)

(56) Entgegenhaltungen:
EP-A- 0 365 327          WO-A- 01/66490
DE-A- 10 011 013         DE-A- 10 156 132
US-A- 3 302 999          US-A- 5 300 272

• KLETT J ET AL: "High-thermal-conductivity, mesophase-pitch-derived carbon foams: effect of precursor on structure and properties" , CARBON, ELSEVIER SCIENCE PUBLISHING, NEW YORK, NY, US, VOL. 38, NR. 7, PAGE(S) 953-973 XP004197491 ISSN: 0008-6223 das ganze Dokument

## Beschreibung

Die Erfindung betrifft Schaumstoffe mit hoher innerer Oberfläche, die mindestens zu 70 Gew.-% aus Kohlenstoff bestehen, sowie ein Verfahren zu deren Herstellung durch Pyrolyse von Kunststoff-Schaumstoffen.

Schaumstoffe, die vorwiegend aus Kohlenstoff zusammengesetzt sind und auch als Kohlenstoff-Schaumstoffe bezeichnet werden, sind wegen der Materialeigenschaften des Kohlenstoffs für verschiedene Anwendungen interessant. So werden z.B. in US-A-4,067,956 und in Sherman, A.J., Tuffias, R.H. und Kaplan, R.B. (1991) Ceramic Bulletin, 70, 1025-1029, deren Einsatz als Filtermaterial, auch für Anwendungen bei hohen Temperaturen, als Hochtemperatur-Thermoisolation, als Katalysatorträger sowie als Elektrodenmaterial in Batterien erwähnt. Man findet in der Literatur auch die Verwendung von Kohlenstoff-Schaumstoffen als Elektrodenmaterial in Hochleistungskondensatoren (z.B. US-A-5,300,272), für medizinische Implantate (WO-A-98/02382), als Träger von z.B. durch den Übergang fest/flüssig wärmeschluckenden Materialien, auch für höhere Temperaturen (WO-A-99/64223), als Säulenmaterial für die Chromatographie (DE-A-3135394) oder als Elektrodenmaterial für Enzymelektroden (Blaedel, W.J. und Wang, Joseph (1980), Anal. Chem. 52, 1426-1429).

Die Kohlenstoff-Schaumstoffe sind neben Ihrer Anwendung als solche auch Ausgangsstoffe zur Erzeugung von Hochleistungsmaterialien: In EP-A-581696 wird die Herstellung eines Kohlenstoff/Kohlenstoff-Verbundmaterials aus einer auf komprimiertem Kohlenstofffasermaterial durch Imprägnierung mit einem schweren Kohlenwasserstoff entstehenden Schaumstoffstruktur beschrieben. Dieses Kohlenstoff/ Kohlenstoff-Verbundmaterial wird als Friktionsmaterial für Scheibenbremsen besonders hoher Effektivität genutzt. In WO-A-98/27023 geht man für die gleiche Anwendung direkt von einem Kohlenstoff-Schaumstoff aus. Nach EP-A-0976698 wird z.B. eine poröse Kohlenstoffschicht mit 40 bis 95 % Offenzelligkeit mit geschmolzenem Silizium getränkt und anschließend auf Raumtemperatur abgekühlt. Anwendungen des entstandenen Verbundmaterials sind ebenfalls Fahrzeugbrems- und -kupplungsscheiben.

Für die Herstellung von Kohlenstoff-Schaumstoffen sind bisher folgende Verfahren bekannt:

1. Tränkung von offenzelligem Polyurethan-Schaumstoff

Die Tränkung erfolgt mit Stoffen, die bei der anschließenden Pyrolyse bei Temperaturen über 500°C, meist über 800°C oder auch weit über 1000°C, eine hohe Kohlenstoffausbeute ergeben. Solche Tränkungsmittel sind z.B. wärmehärtende Harze, meist Phenolharz, oder eine Mischung eines solchen Harzes mit Pech, meist so genanntes "mesophase pitch". Das Verfahren der Tränkung von offenzelligem Polyurethan-Schaumstoff und anschließender Pyrolyse ist z.B. in US-A-4,067,956, US-A-3,922,334, WO-A-98/02382, WO-A-00/15576 und US-A-6,040,266 beschrieben.

Dieses Verfahren hat den Vorteil, dass äußerlich die gute Zellstruktur der Polyurethan-Schaumstoffe auf den Kohlenstoff-Schaumstoff übertragen wird. Die nach der Tränkung des Polyurethan-Schaumstoffes vorliegende Struktur eines einzelnen Steges der Zellen des Schaumstoffes ist jedoch dadurch charakterisiert, dass der Polyurethansteg mit einem Mantel des Tränkungsmittels umgeben ist. Die Tränkung des Polyurethan-Schaumstoffes ist damit nicht als Durchdringung der kompakten Polyurethan-Zellstege mit dem Tränkungsmittel, sondern als deren oberflächliche Bedeckung zu beschreiben. Beim Härten dieses Verbundes in der Wärme (Aoki, Y. und Mc Enaney, B. geben z.B. in (1995) British Ceramic Transactions, 94, 133-37 eine Temperatur von 160°C an) verdampft zunächst verwendetes Lösungsmittel, und es findet die Aushärtung des Harzes statt. Das Polyurethanmaterial zersetzt sich anschließend bei der Pyrolyse zu gasförmigen Stoffen. Aoki, Y. und Mc Enaney, B. beschreiben in (1995) British Ceramic Transactions, 94, 133-37 den bei 1200°C als Kohlenstoff verbleibenden Anteil des Polyurethans mit ca. 3 %, den des zur Tränkung verwendeten Phenolharzes mit ca. 50 %. Die gasförmigen Pyrolyseprodukte des Polyurethans entweichen damit aus dem Steg durch die aus dem Harz im Entstehen begriffene Kohlenstoffwand. Dadurch bilden sich im Kohlenstoffschaumstoff Stege, die im Inneren hohl sind. Durch das Entweichen der verhältnismäßig großen Mengen von Pyrolyseprodukten des Polyurethans ist darüber hinaus die Struktur der Stegwände gestört. Damit entsteht zwar ein Kohlenstoff-Schaumstoff, der die gute Schaumstoffstruktur des Polyurethanschaumstoffes äußerlich abbildet aber durch hohle Stege und strukturgestörte Stegwände geschädigt ist. Diese Struktur ist u.a. mit Festigkeitseinbußen verbunden. Auch neuere Erfindungen zu diesem Verfahren, z.B. WO-A-00/15576 und US-A-6,040,266, repräsentieren eine solche Struktur, verbunden mit nicht optimalen Eigenschaften der entstehenden Kohlenstoff-Schaumstoffe.

2. Pyrolyse von Aerogelen aus organischen Polymeren zu Kohlenstoff-Schaumstoff

Zur Herstellung der Aerogele aus organischen Polymeren wird, z.B. nach WO-A-93/14511, die Reaktion von Formaldehyd und Resorcinol in wässriger Natriumcarbonatlösung über 24 Stunden bei Raumtemperatur, danach 24 Stunden bei 50°C, anschließend 72 Stunden bei 95°C genutzt. Das entstandene Gel wird mit 0,1 %iger Lösung von Trifluoressigsäure in Aceton und danach mit reinem Aceton gewaschen. Anschließend erfolgt die Behandlung mit flüssigem $CO_2$ bei 63 bar (900 psi) und 14°C über 1 Stunde, danach mit frischem $CO_2$ jeweils 15 min 6-mal am Tag über 2 Tage, schließlich im geschlossenen Kessel unter überkritischen Bedingungen bei 50°C und 127 bar (1800 psi) über 4 Stunden und bei stufenweiser Druckreduktion über 8 Stunden zu einem trockenen Aerogel. Danach erfolgt eine Pyrolyse bei 600 bis 1200°C zu einem Kohlenstoff-Schaumstoff. In analog umständlicher Weise wird die Herstellung von Kohlenstoff-Schaumstoffen auch in den folgenden Arbeiten beschrieben: Journal of Non-Crystalline Solids, 225, 64-68, sowie WO-A-98/44013 (beide1998, organische Basis jeweils Isocyanataddukte), Polym. Prepr., Am. Chem. Soc., Div. Polym. Chem., 37(2), 777-778 (1996, organische Basis Friedel-Crafts Addukte), US-A-5300272, US-A-5268395, US-A-5358802, Polym. Mater. Sci. Eng., 57, 113-117 und WO-A-95/06002 (organische Basis jeweils Polyacrylnitril), Polym. Mater. Sci. Eng., 57, 113-117 (Polyacrylnitril mit Maleinsäureanhydrid), EP-A-0987294 (organische Basis Polyimid), WO-A-99/01502, US-A-5420168, US-A-5529971, US-A-4997804 und US-A-5402306 (organische Basis Resorcin-Formaldehyd - Kondensate), US-A-4992254, US-A-5047225 und US-A-5232772 (organische Basis Styren, Divinylbenzol, Resorcin, Formaldehyd, so genannter CPR-Schaum-"Carbonized Polystyrene / Resorcinol"-Formaldehyde Foam).

Die Struktur derartiger Kohlenstoff-Schaumstoffe mit extrem kleinen Zellen weit unter 30 $\mu$m, oft deutlich unter 1$\mu$m, ist für viele Anwendungen ungeeignet, z.B. wegen des sehr hohen Strömungswiderstandes für den Einsatz als Filtermaterial, als Katalysatorträger, als Träger von Materialien oder als Reaktionspartner zur Herstellung von Verbundmaterialien, z.B. mit Silizium oder weiterem Kohlenstoff. Diese extrem feinzellige Struktur muss zudem sehr umständlich und zeitaufwendig hergestellt werden. Damit haben Werkstoffe mit dieser Schaumstoffstruktur neben der Nichteignung für viele Anwendungen noch den Nachteil, sehr hohe Herstellungskosten zu verursachen.

3. Verschäumen von C-haltigem Material bei höherer Temperatur und anschließendes Brennen

Eine oft beschriebene Variante ist die Verschäumung von Pech, z.B. nach WO-A-99/11585, WO-A-99/61549, EP-A-0700106. Der Nachteil der entstandenen Schaumstoffstrukturen zeigt sich in einer zu geringen Offenzelligkeit deutlich unter 90 %, die z.B. in US-A-4276246 durch Werteangaben belegt wird. Die Ursache ist in dem komplizierten Verschäumungsverfahren bei erhöhter Temperatur zu sehen. Das gilt auch für Schaumstoffstrukturen, die nach WO-A-99/65843 in analoger Weise aus Pech im Gemisch mit härtbaren flüssigen Harzen entstehen. Beim Einsatz von biogenen Materialien bilden sich bei der Pyrolyse ebenfalls poröse Kohlenstoff-Körper, z.B. nach WO-A-99/11581. Diese Körper haben naturgemäß keine eigentliche Schaumstoffstruktur und sind daher für die meisten Anwendungen der Kohlenstoff-Schaumstoffe ungeeignet.

4. Ausfüllen einer Matrix mit organischem Material, danach Brennen und gegebenenfalls Entfernen des Matrixmaterials

Nach Pekala, R.W. & Hopper, R.W. (1987), Low-density microcellular carbon foams, Journal of Materials Science, 22, 1840-1844 werden z.B. dazu Presslinge aus feinkörnigem Natriumchlorid mit Phenolharz getränkt. Nach der Härtung des Phenolharzes wird das Natriumchlorid mit Wasser herausgelöst. Die entstandene poröse Struktur wird dann nach dem Trocknen pyrolysiert. Die entstandene Struktur ist dadurch charakterisiert, dass sie die Hohlräume einer gepressten Pulverschüttung darstellt. Diese Struktur besitzt durch die notwendige enge Berührung der Teilchen des Natriumchlorid-Pulvers eine große Zahl von Stellen, an die das Polymermaterial nicht heran kann, wodurch die nach dem Herauslösen entstehende Struktur durch entsprechend viele Schwachstellen charakterisiert ist. Daraus resultieren sehr niedrige Festigkeiten, die dann auch für den nach der Pyrolyse entstandenen Kohlenstoff-Schaum gelten. Die von den Autoren angegebene Druckfestigkeit des Kohlenstoff-Schaumstoffes bei einer Dichte von 50 mg/cm3 von nur 0,00011 MPa bestätigt diesen Nachteil der entstandenen Schaumstoffstruktur, die z.B. in analoger Weise auch nach DE-A-3135394 entsteht.

Die Tränkung von Phenolharzmikrokugeln oder Kohlenstoffmikrokugeln mit einem carbonisierenden Harz wird von Benton, S.T. & Schmitt, C.R. in (1972), Carbon, 10, 185, beschrieben. Das entstehende Verbundmaterial wird bei 900 und 2150°C pyrolysiert. Der daraus resultierende Kohlenstoff-Schaumstoff zeichnet sich durch gute Druckfestigkeiten aus, z.B. 452 lb/in$^2$ (3,2 N/mm2) bei 170 kg/m3, ist aber nur geringfügig offenzellig und damit für viele Einsatzgebiete nicht einsetzbar. Die Kohlenstoff-Schaumstoff-Struktur hat neben der ungenügenden Offenzelligkeit noch den Nachteil, dass sie nicht Dichten unter 150 kg/m3 erreichen kann.

5. Poröse Kohlenstoffmaterialien, ausgehend von Kohlenstoff-Faserstrukturen

Diese porösen Strukturen werden zur Herstellung eines dichten Kohlenstoff-Materials z.B. für Scheibenbremsen eingesetzt. Nach WO-A-00/39043 werden Kohlenstofffasern mit einer carbonisierbaren Flüssigkeit bei erhöhter Temperatur und erhöhtem Druck getränkt. Durch plötzliches Entspannen und Abschrecken entsteht eine Schaumstoffstruktur, die zwischen 600 und 1000°C pyrolysiert und gegebenenfalls bei 2200 bis 2300°C nachbehandelt wird. Die Verwendung von Kohlenstofffasern als Ausgangsmaterial ist neben deren aufwendiger Herstellung sehr kostenintensiv, wobei diese Fasern die Bildung einer regelmäßigen Schaumstoffstruktur verhindern. Ein ähnliches Verfahren mit den gleichen Nachteilen wird in EP-A-581696 beschrieben.

6. Pyrolyse von Polymer-Schaumstoffen

Diese wird z.B. von ZHOU Jia-hong, XUE Kuan-hong, XU Shi-min, SUN Dong-mei, & GU Wei-jin (2000) in Chinese Journal of Power Sources 24 (3), 157-158, 177 benutzt. Die Struktur von Kohlenstoff-Schaumstoffen aus Polyurethan-Schaumstoff, wie er von den Autoren verwendet wird, weist jedoch Inhomogenitäten z.B. in Form von Rissen oder Verdichtungen auf, die u.a. die mechanischen Eigenschaften negativ beeinflussen. Derartige ungünstige Strukturen werden auch bei der bisher bekannten direkten Pyrolyse anderer Polymerschaumstoffe erhalten.

Nach unserer unveröffentlichten Patentanmeldung Nr. 101 56 132.6 können Kohlenstoff-Schaumstoffe hergestellt werden, die die unter 1. bis 6. aufgeführten Mängel, wie z.B. Festigkeitsminderungen, zu hohe Strömungswiderstände oder zu umständliche und damit kostenaufwendige Herstellungsverfahren, nicht mehr aufweisen. Leider ist die innere Oberfläche dieser Schaumstoffe stets kleiner als 50 m2/g, meist kleiner als 30 m2/g und sehr oft kleiner als 20 m2/g. Diese kleine innere Oberfläche ist nachteilig für viele Anwendungen, z.B. beim Einsatz als Elektrodenmaterial für Superkondensatoren, die ein Material mit hoher innerer Oberfläche erfordern.

Es bestand damit die Aufgabe, einen Kohlenstoff-Schaumstoff herzustellen, der die Vorteile des Schaumstoffes nach DE-Anmeldung Nr. 101 56 132.6 aufweist und zusätzlich eine hohe innerer Oberfläche besitzt, die gleichzeitig gut zugänglich ist.

Die Aufgabe wurde dadurch gelöst, dass durch Pyrolyse von Kunststoff-Schaumstoffen, die mindestens 30 Masse-% eines Polymermaterials mit einem Stickstoffgehalt über 6 Masse-% enthalten und eine Porosität zwischen 35 und 99,5 % sowie eine Offenzelligkeit über 1 % aufweisen, ein mindestens zu 70 Gew.-% aus Kohlenstoff bestehender Schaumstoff hergestellt wurde, der durch die Wirkung von in den Kunststoff-Schaumstoff eingearbeiteten und/oder auf der Oberfläche befindlichen Anorganika und/oder von Wasserdampf und/oder Kohlendioxid und/oder von Sauerstoff während der Temperaturbehandlung eine innere Oberfläche über 50 m2/g erhält. Dieser vorwiegend aus Kohlenstoff bestehende Schaumstoff weist weiterhin eine mittlere Zellgröße über 20 $\mu$m, eine auf diese Zellgröße bezogene Porosität zwischen 35 und 99,5 % sowie eine Offenzelligkeit über 90 % auf und besitzt Zellstege, die im Querschnitt ein Dreieck mit nach innen gekrümmten Seiten aufweisen, und enthält Poren im Zellgerüstmaterial mit Abmessungen von 0,2 nm bis 50 nm und einem Volumen von 0,01 cm3/g bis 0,8 cm$^3$/g.

Gegenstand der Erfindung ist ein Verfahren zur Herstellung eines mindestens zu 70 Gew.-% aus Kohlenstoff bestehenden Schaumstoffes durch Pyrolyse von Kunststoff-Schaumstoffen, das dadurch gekennzeichnet ist, dass die eingesetzten Kunststoff-Schaumstoffe mindestens 30 Masse-% eines Polymermaterials mit einem Stickstoffgehalt über 6 Masse-% enthalten und eine Porosität zwischen 35 und 99,5 % sowie eine Offenzelligkeit über 1 % besitzen, in den Kunststoff-Schaumstoff eingearbeitet und/oder auf die Oberfläche aufgebracht Anorganika aufweisen und/oder während und/oder nach der Pyrolyse mit Wasserdampf und/oder Kohlendioxid und/oder von Sauerstoff bei Temperaturen über 400°C behandelt werden.

Der nach dem erfindungsgemäßen Verfahren hergestellte, überwiegend aus Kohlenstoff bestehende Schaumstoff enthält mindestens 70 Gew.-%, vorzugsweise 75 bis 99,5 Gew.-% und besonders bevorzugt 80 bis 99 Gew.-%, Kohlenstoff. Seine mittlere Zellgröße liegt über 20 $\mu$m, vorzugsweise über 50 $\mu$m, und seine auf diese Zellgröße bezogene Porosität beträgt 35 bis 99,5 %, bevorzugt 60 bis 98 %, besonders bevorzugt 70 bis 97 %. Der Kohlenstoff-Schaumstoff weist eine ebenfalls auf diese Zellgröße bezogene Offenzelligkeit von über 90 %, bevorzugt über 93 %, auf.

Dabei weist die Mehrzahl der Zellstege des Kohlenstoff-Schaumkörpers einen Querschnitt auf, der als ein Dreieck mit nach innen gekrümmten Seiten beschrieben werden kann. Das Zellgerüstmaterial weist Poren mit Abmessungen von 0,2 nm bis 50 nm, bevorzugt 0,5 nm bis 20 nm, besonders bevorzugt 0,8 nm bis 10 nm auf, die ein Volumen von 0,01 cm3/g bis 0,8 cm3/g haben, verbunden mit einer großen inneren Oberfläche von über 50 m2/g, bevorzugt über 150 m2/g, besonders bevorzugt über 300 m2/g, für besondere Ansprüche über 500 m2/g, in Spezialfällen über 1000 m2/g.

Der Kohlenstoff-Schaumstoff weist weiterhin einen Wasserstoffgehalt von vorzugsweise unter 3 Masse-%, insbesondere unter 2 Masse-%, und einen Stickstoffgehalt von vorzugsweise über 0,01 Masse-%, bevorzugt über 0,05 Masse-%, in besonderen Fällen über 1 Masse-%, auf.

Das Gerüstmaterial des Kohlenstoff-Schaumstoffes besitzt vorzugsweise eine Dichte von 0,8 bis 2,3 g/cm3, besonders bevorzugt 1,2 bis 2,0 g/cm3. Die Dichte des Gerüstmaterials hängt von der Struktur des Kohlenstoffs und dem Anteil der Poren mit Abmessungen zwischen 0,2 und 50 nm ab. Die Struktur des Kohlenstoffs kann mehr glasartig/röntgenamorph mit einer niedrigeren Dichte oder mehr graphitähnlich/röntgenkristallin mit höherer Dichte sein, wobei mit höheren Pyrolysetemperaturen der graphitähnliche/röntgenkristalline Anteil zunimmt. Von etwa 500°C bis etwa 1200°C entstehen röntgenamorphe Kohlenstoff-Schaumstoffe, bei Temperaturen darüber Schaumstoffe mit parallel zur Temperatur steigender Röntgenkristallinität.

Das Gerüstmaterial des Kohlenstoff-Schaumstoffes kann elektrische Leitfähigkeiten von $10^{-10}$ S/cm bis 5000 S/cm, vorzugsweise von $10^{-5}$ S/cm bis 1000 S/cm und besonders bevorzugt von $10^{-2}$ S/cm bis 500 S/cm, aufweisen. Die Leitfähigkeit kann man durch Wahl der Pyrolysetemperatur einstellen. Beispielsweise entstehen bei Temperaturen um 500°C Kohlenstoff-Schaumstoffe extrem niedriger elektrischer Leitfähigkeit, bei Temperaturen um 2300°C aber Schaumstoffe hoher Leitfähigkeit, die mit wachsender Zeit der Temperaturbehandlung und durch Einarbeitung von Graphit in den Kunststoff-Schaumstoff vor der Pyrolyse noch weiter erhöht werden kann. Dazwischen kann man mittlere Leitfähigkeiten je nach Temperatur erhalten.

Anstelle von Graphit kann man auch Substanzen, die sich bei der Pyrolyse leicht in Graphit umwandeln, zugeben. Eine solche Substanz ist beispielsweise Mesophasen-Pech, in der Literatur mesophase-pitch genannt, wie es z.B. von der Firma Mitsubishi als Mitsubishi ARA-24 Mesophase Pitch hergestellt wird.

Das Gerüstmaterial des nach dem erfindungsgemäßen Verfahren hergestellten Kohlenstoff-Schaumstoffes kann auch durch ein mit der $^{13}$C Festkörper-Kernresonanzspektroskopie gemessenes Signal zwischen 100 ppm und 200 ppm, das einen Flächen-Prozensatz über 95 Prozent im Spektrum einnimmt, gekennzeichnet werden.

Der mindestens zu 70 Gew.-% aus Kohlenstoff bestehende Schaumstoff kann durch mechanische Zerkleinerung in eine Pulverform gebracht werden, was für bestimmte Anwendungen vorteilhaft ist. Die mechanische Zerkleinerung kann auf jede bekannte Art und Weise erfolgen. Besonders eignet sich eine Kugelmühle. Das pulverförmige Kohlenstoffmaterial weist neben den oben beschriebenen Eigenschaften eine maximale Korngröße kleiner als 1000 μm, bevorzugt kleiner als 500 μm, besonders bevorzugt kleiner als 100 μm auf.

Die nach dem erfindungsgemäßen Verfahren hertgestellten, mindestens zu 70 Gew.-% aus Kohlenstoff bestehenden Schaumstoffe sind herstellbar durch Pyrolyse von Kunststoff-Schaumstoffen. Die eingesetzten Kunststoff-Schaumstoffe enthalten dabei mindestens 30 Masse-% eines Polymermaterials bzw. einer Mischung mehrerer Polymermaterialien mit einem Stickstoffgehalt über 6 Masse-%, bevorzugt über 8 Masse-% und besonders bevorzugt über 9 Masse-%, und einer Porosität zwischen 35 und 99,5 % sowie einer Offenzelligkeit über 1 %, bevorzugt über 30 % und besonders bevorzugt über 70 %.

Solche Polymermaterialien sind vorzugsweise solche; die Harnstoff-Formaldehydharze, Melamin-Formaldehydharze oder polymere Isocyanataddukte sind oder enthalten.

Die eingesetzten Harnstoff-Formaldehydharze und Melamin-Formaldehydharze werden nach bekannten Verfahren des Standes der Technik hergestellt. Ein Beispiel für derartige Schaumstoffe ist der Melamin-Formaldehyd-Schaumstoff Basotect® der BASF Aktiengesellschaft.

Als Polymermaterialien werden besonders bevorzugt solche eingesetzt, die polymere Isocyanataddukte enthalten. Diese polymeren Isocyanataddukte enthalten vorteilhafterweise Polyisocyanuratstrukturen, die charakterisiert werden durch ein relatives Verhältnis Ev der Extinktion der nach Präparation mit der Kaliumbromid-Presstechnik registrierten Isocyanurat-Bande im mittleren Infrarotbereich um 1410 $cm^{-1}$ zur Extinktion der Aromaten-Bande um 1600 $cm^{-1}$ von größer 1,5. Vorzugsweise werden Schaumstoffe mit Werten über 3, besonders bevorzugt über 4,5, verwendet. Die angegebenen Wellenzahlen von 1410 $cm^{-1}$ für die Isocyanurat- und 1600 $cm^{-1}$ für die Aromatenstruktur sind die Werte der Lage der Maxima der Banden. Diese Werte können, wie dem Fachmann bekannt, durch die Präparation der Probe und z.B. durch das Aromaten-Substitutionsmuster um jeweils ± 20 $cm^{-1}$ schwanken. Mit den Ausdrücken "Isocyanurat-Bande im mittleren Infrarotbereich um 1410 $cm^{-1}$" bzw. "Aromaten-Bande um 1600 $cm^{-1}$" soll diese Schwankung mit gemeint sein.

Die polymeren Isocyanataddukte werden auf übliche Art und Weise durch Umsetzung von Polyisocyanaten mit sich selbst, wasserstoffaktive Gruppen enthaltenden Verbindungen oder weiteren mit Isocyanat reagierenden Verbindungen unter Verwendung von Katalysatoren, Stabilisatoren,Treibmitteln und gegebenenfalls weiteren Hilfsstoffen hergestellt.

Als Polyisocyanate werden beispielsweise Isomere des Toluylendiisocyanates, bevorzugt Isomere des Diphenylmethandiisocyanates, besonders bevorzugt ein Gemisch aus Isomeren des Diphenylmethandiisocyanates und Polyphenyl-Polyisocyanaten verschiedenen Kondensationsgrades eingesetzt.

Einsetzbar sind auch andere in der Polyurethanchemie übliche Polyisocyanate, wie sie beispielsweise in WO 00/11059 beschrieben sind.

Als wasserstoffaktive Gruppen enthaltende Verbindungen werden insbesondere hydroxylgruppenhaltige Polymerisationsprodukte einer Molmasse größer 200 g/mol, vorzugsweise größer 500 g/mol und besonders bevorzugt größer 1000 g/mol, und einer Funktionalität größer 1, vorzugsweise größer 2, eingesetzt.

Vorteilhafterweise verwendet man Verbindungen mit Etherstrukturen, die bekannterweise bevorzugt durch Polymerisation von Alkylenoxiden, bevorzugt Ethylenoxid und/oder Propylenoxid, und Startersubstanzen mit wasserstoffaktiven Gruppen erhalten werden.

Vorteilhafterweise kommen als wasserstoffaktive Verbindungen weiterhin Polyesterole auf der Basis von aromatischen Polycarbonsäuren und mehrfunktionellen Alkoholen, bevorzugt aromatischen Esterstrukturen, zur Anwendung.

Als wasserstoffaktive Gruppen enthaltende Verbindungen kommen auch noch weitere entsprechende Stoffe, wie sie in der Fach- und Patentliteratur, beispielsweise in WO 00/11059 beschrieben sind, in Frage.

Neben den wasserstoffaktiven Verbindungen kann man auch weitere mit Isocyanat reagierende Verbindungen einsetzen. Derartige Verbindungen sind beispielsweise solche mit organischen Anhydridgruppen, die zu Imidstrukturen, und solche mit Epoxidgruppen, die zu Oxazolidinonstrukturen reagieren. Neben den Imid- und Oxazolidinonstrukturen müssen im Kunststoff-Schaumstoff die oben mit dem Verhältnis E beschriebenen Mindestmengen an Isocyanuratstrukturen vorhanden sein.

Die Umsetzung der Polyisocyanate und wasserstoffaktive Gruppen enthaltenden Verbindungen erfolgt im Beisein von Katalysatoren. Dafür werden die in der Polyurethanchemie üblichen Katalysatoren, wie sie beispielsweise in WO 00/11059 beschrieben sind, verwendet. Üblicherweise werden neben diesen Katalysatoren, wie z.B. Aminen, oder allein vor allem zur Bildung von Isocyanuratstrukturen Alkalisalze, vor allem Kaliumsalze und/oder Triazine als Katalysatoren verwendet. Vorteilhafterweise wird erfindungsgemäß als Co-Katalysator mindestens eine Verbindung mit Kronenetherstrukturen, wie beispielsweise 1,4,7,10,13,16-Hexaoxacyclooctadecan ("18-Crown-6"), eingesetzt.

Neben den oben beschriebenen Polyisocyanaten, wasserstoffaktive Gruppen enthaltende Verbindungen und Katalysatoren werden bei der Herstellung der polymeren Isocyanataddukte weitere Verbindungen, wie Stabilisatoren, Treibmittel und sonstige Hilfs- und Zusatzstoffe, zugesetzt. Hierfür kommen die in der Polyurethanchemie üblichen Verbindungen, wie sie beispielsweise in WO 00/11059 beschrieben sind, in Frage. Vorteilhafterweise werden als Stabilisatoren siliziumorganische Verbindungen, insbesondere Polyethersiloxane, als Treibmittel Luft und/oder Stickstoff und/oder $CO_2$ und/oder Wasser und/oder verdampfbare organischen Flüssigkeiten, wie beispielsweise n-Pentan, iso-Pentan und/oder Cyclopentan, eingesetzt. Vorteilhafterweise verwendet man das aus der Reaktion zwischen Wasser und Isocyanat entstehende $CO_2$ allein oder in Verbindung mit einem Pentan. Als sonstige Hilfs- und Zusatzstoffe haben sich beispielsweise Stoffe niedriger Viskosität zur Verbesserung der Fließfähigkeit, die in das Polymer einreagieren, wie z.B. Furfurylalkohol, oder die die Carbonisierung bei der anschließenden Pyrolyse begünstigen, wie z.B, Triethylphosphat, bewährt. Vorteilhafterweise werden Füllstoffe mit hohem Kohlenstoffgehalt, wie Ruß und/oder Graphit, mitverwendet.

Zur Erzeugung der erfindungsgemäßen Poren im Zellgerüstmaterial der Abmessungen 0,2 nm bis 50 nm mit hoher innerer Oberfläche arbeitet man vorteilhafterweise anorganische Füllstoffe in die Kunststoff-Schaumstoffe ein, die danach pyrolysiert werden. Solche Füllstoffe sind insbesondere anorganische Salze, bevorzugt Zinkchlorid, Calciumcarbonat, Ammoniumpolyphosphat, allein oder in beliebigen Gemischen, und/oder Blähgraphit und/oder Metallpulver, beispielsweise Zinkstaub und/oder Aluminiumpulver. Die anorganischen Stoffe werden vorteilhafterweise in einer Menge von 0,1 bis 60 Masse-%, vorzugsweise von 0,5 bis 40 Masse-%, besonders bevorzugt von 1 bis 25 Masse-%, jeweils bezogen auf die Gesamtmasse der Kunststoff-Schaumstoffe, eingesetzt.

Die Einarbeitung dieser Stoffe geschieht besonders einfach bei den Kunststoff-Schaumstoffen auf Isocyanatbasis durch Einmischen in eine der flüssigen Komponenten, die zur Synthese verwendet werden. Die eingesetzten Kunststoff-Schaumstoffe können aber auch mit Lösungen oder Dispersionen anorganischer Salze, Metallpulver oder Blähgraphit in Wasser oder organischen Lösungsmitteln getränkt werden, vorteilhafterweise derart, dass nach dem Abdampfen der Lösungsmittel eine Menge von 0,1 bis 60 Masse-%, vorzugsweise die oben genannten Mengen, der Anorganika auf dem Schaumstoff verbleibt. Beide Maßnahmen, das Einarbeiten bzw. Aufbringen der Anorganika, können auch kombiniert angewandt werden.

Die für das erfindungsgemäße Verfahren eingesetzten Kunststoff-Schaumstoffe besitzen eine Offenzelligkeit von über 1 %, bevorzugt über 30 % und besonders bevorzugt über 70 %. Vorteilhafterweise werden zur Erzeugung der gewünschten Offenzelligkeit flüssige, höhermolekulare, ungesättigte Kohlenwasserstoffe, wie Polybutadien oder Polyoctenylen eingesetzt, wie es beispielsweise in DE-A-4303809 beschrieben ist.

Der Stickstoffgehalt der Kunststoff-Schaumstoffe beträgt über 6 Masse-%, bevorzugt über 8 Masse-% und besonders bevorzugt über 9 Masse-%. Er ergibt sich bei den Isocyanataddukten aus der MDI-Menge in der Rezeptur. Reines MDI hat 11,2 Masse-% Stickstoff. Bei den Harnstoff-Formaldehydharzen und den Melaminharzen liegen die Stickstoffgehalte bekanntermaßen immer über 6 Masse-%.

Die Porosität der eingesetzten Kunststoff-Schaumstoffe liegt zwischen 35 und 99,5 %. Die Porosität ergibt sich aus der Dichte des Schaumstoffes und des Zellgerüstmaterials (Die Berechnung der Porosität ist in den Beispielen angegeben). Bevorzugt wird ein Bereich der Porosität von 40 bis 95 %, besonders bevorzugt von 50 bis 90 %.

Die zur Herstellung der Kohlenstoff-Schaumstoffe der Pyrolyse unterzogene Polymermasse besteht zu mindestens 30 Masse-%, vorzugsweise zu mindestens 50 Masse-% und besonders bevorzugt zu mindestens 70 Masse-%, aus den oben beschriebenen Kunststoff-Schaumstoffen. Als weitere Bestandteile werden der Masse vor der Pyrolyse weitere Polymermaterialien und/oder beispielsweise Füllstoffe zugegeben. Solche Füllstoffe sind vorzugsweise solche, die bei der Pyrolyse Kohlenstoff ergeben, wie z.B. Pech oder Kohlenstoff in Form von Graphit. Gute Ergebnisse erzielt man durch Mitverwendung von Phenolharzen durch Einmischen von noch nicht ausgehärteten Phenolharzkomponenten in eine oder mehrere Komponenten.

Die Pyrolyse der Kunststoff-Schaumstoffe erfolgt durch Erhitzen von Raumtemperatur auf über 500°C, bevorzugt über 800°C, in besonderen Fällen bis zu 3000°C und darüber. Bei besonders hohen Temperaturen über 1500°C erfolgt die Pyrolyse vorteilhafterweise unter Argon oder anderen Edelgasen und/oder Vakuum.

Das Erhitzen wird vorzugsweise in Stickstoff- und/oder Edelgasatmosphäre, bei über 1500°C besonders bevorzugt in Edelgasatmosphäre, durchgeführt, gegebenenfalls bei teilweiser, d.h. anteiliger und/oder zeitweiser Anwesenheit von Sauerstoff und/oder Kohlendioxid. Die Anwesenheit von Sauerstoff und/oder Kohlendioxid erfolgt bevorzugt im Temperaturbereich von Raumtemperatur bis 1500°C, insbesondere von 150 bis 600°C, besonders bevorzugt zwischen 250 und 450°C.

Erfindungsgemäß erfolgt das Erhitzen vorteilhafterweise mit Heizraten von 0,05 K/min bis 10 K/min, bevorzugt von 1 K/min bis 8 K/min. Während der Pyrolyse werden die Gasströme in einer Geschwindigkeit von 0,1 Liter pro Stunde bis 10 Liter pro Minute und Gramm eingesetztem Schaumstoff durchgeleitet. In einer vorzugsweisen Verfahrensvariante wird die maximale Pyrolysetemperatur 5 Minuten bis 2 Tage lang gehalten.

Das Abkühlen erfolgt vorzugsweise mit Kühlraten von 0,05 K/min bis 40 K/min, bevorzugt 15 bis 25 K/min auf Raumtemperatur.

Möglich ist auch eine Schock-Abkühlung von maximal 2500°C auf Raumtemperatur durch Einbringen des heißen Kohlenstoff-Schaumstoffes in eine Umgebung mit Raumtemperatur um 20 bis 25°C.

Weiterhin vorteilhaft ist eine Unterbrechung der Aufheizung und Kühlung durch Konstanthalten der Temperatur auf sogenannten "Rampen" über 5 Minuten bis 8 Tage.

Die Erzeugung der Poren der Abmessungen 0,2 nm bis 50 nm mit hoher innerer Oberfläche im Zellgerüstmaterial kann auch durch gezielte Einwirkung von Wasserdampf und/oder Kohlendioxid und/oder von Sauerstoff während der Pyrolyse der Kunststoff-Schaumstoffe oder durch anschließende Einwirkung von Wasserdampf und/oder Kohlendioxid und/oder von Sauerstoff auf fertigen Kohlenstoff-Schaumstoff, der vorher durch Pyrolyse in Stickstoff und/oder Edelgas erzeugt wurde, erfolgen. Die Behandlung mit Wasserdampf und/oder Kohlendioxid und/oder von Sauerstoff wird oberhalb einer Temperatur von 400°C durchgeführt, wobei sich die Wirkung mit steigender Temperatur sowie steigender Konzentration verstärkt.

Dabei wächst die innere Oberfläche mit zunehmender Dauer der Behandlung mit Wasserdampf, Kohlendioxid und/oder Sauerstoff, mit zunehmender Temperatur sowie mit zunehmender Konzentration der Gase. Es ist jedoch sinnvoll, die innere Oberfläche nicht über 2000 m2/ Gramm zu steigern, da dann der durch die Erzeugung der Poren erforderliche Materialabbau so stark wird, dass die mechanischen Eigenschaften stark beeinträchtigt werden. Die innere Oberfläche wird vorwiegend durch die genannten Poren mit den Abmessungen von 0,2 bis 50 nm erzeugt.

Die während der Pyrolyse durchgeführte Behandlung mit Wasserdampf erfolgt vorteilhafterweise im Konzentrationsbereich von 0,5 bis 80 Vol.-%, vorzugsweise von 10 bis 60 Vol.-% und besonders bevorzugt von 20 bis 50 Vol.-%, Wasserdampf im Wasserdampfgemisch mit Stickstoff und/oder Edelgas. Die Temperatur der Wasserdampfbehandlung liegt über 400°C und vorzugsweise unter 1200°C, vorteilhafter zwischen 500 und 1100°C, besonders bevorzugt zwischen 600 und 1000°C.

Die während der Pyrolyse durchgeführte Behandlung mit Kohlendioxid erfolgt vorteilhafterweise im Konzentrationsbereich über 1 Vol.-% Kohlendioxid im Kohlendioxid-Gemisch mit Stickstoff und/oder Edelgas. Vorzugsweise werden über 20 Vol.-% Kohlendioxid eingesetzt, besonders bevorzugt über 50 Vol.-%. Die Wirkung ist am stärksten mit reinem Kohlendioxid. Die Temperatur der Kohlendioxidbehandlung liegt über 400°C und vorzugsweise unter 1500°C, bevorzugt zwischen 600 und 1300°C, besonders bevorzugt zwischen 700 und 1100°C.

Die Behandlung kann unter zeitweiser gleichzeitiger Anwesenheit von Sauerstoff in Konzentrationen von 0,05 bis 30 Vol.-% im Gasgemisch im Bereich von Raumtemperatur bis zu 1500°C, vorzugsweise über 300 bis 1200°C, besonders bevorzugt zwischen 300 und 800°C, erfolgen. Die Sauerstoffkonzentrationen liegen vorzugsweise zwischen 1 und 20 Vol.-%, besonders bevorzugt zwischen 3 und 15 Vol.-%. Der Sauerstoff kann in Kombination mit allen beschriebenen Varianten eingesetzt werden. Er bewirkt eine Erhöhung der Ausbeute an Kohlenstoff-Schaumstoff und eine Erhöhung der inneren Oberfläche. Die Ausbeute wird vor allem durch Sauerstoffeinwirkung während der Pyrolyse des Kunststoff-Schaumstoffes zwischen Raumtemperatur und 600°C erhöht.

In analoger Weise kann man den Kohlenstoff-Schaumstoff zunächst durch Pyrolyse in Stickstoff und/oder Edelgas herstellen und anschließend diesen Kohlenstoff-Schaumstoff mit Wasserdampf und/oder Kohlendioxid und/oder Sauerstoff behandeln. Dazu wird der fertig pyrolysierte Kohlenstoff-Schaumstoff anschließend bei über 500°C mit 1 bis zu 80 Vol.-% Wasserdampf im Wasserdampfgemisch mit Stickstoff und/oder Edelgas oder bei über 500°C mit über 1 Vol.-%, vorzugsweise von 5 bis 90 Vol.-%, Kohlendioxid in einem Gemisch aus Kohlendioxid mit Stickstoff und/oder Edelgas oder mit reinem Kohlendioxid behandelt.

Bei Temperaturen unter 2000°C, bevorzugt unter 1700°C, besonders bevorzugt unter 1500°C kann Stickstoff allein oder im Gemisch mit einem Edelgas als Inertgas / Inertgasgemisch eingesetzt werden. Entsprechend soll über 2000°C, bevorzugt bereits über 1700°C und besonders bevorzugt bereits über 1500°C, kein Stickstoff mehr eingesetzt werden. Das ist auch bei der Pyrolyse im Vakuum zu gewährleisten.

Die nach dem erfindungsgemäßen Verfahren hergestellten, vorwiegend aus Kohlenstoff zusammengesetzten Schaumstoffe hoher innerer Oberfläche eignen sich für elektrische und elektro-chemische Anwendungen, als Filter- und Wärmedämmmaterial, als Träger- und Speichermaterial und als Ausgangsstoff für weitere Umsetzungen sowie für weitere Anwendungen von Kohlenstoff-Schaumstoffen.

Vorteilhaft eingesetzt werden kann er beispielsweise als Elektrodenmaterial in Batterien, für die elektrochemische Synthese, für elektrochemische Sensoren, z.B. Enzymelektroden, insbesondere als Elektrodenmaterial für Superkondensatoren oder Brennstoffzellen, als Filtermaterial für flüssige Metalle, z.B. Kupfer, als Wärmeübertragungsmatrix, als Säulenmaterial in der Chromatographie, als Ausgangsmaterial für die Umsetzung mit Silizium zu Siliziumcarbidkörpern, z.B. für Hochleistungsfriktionsmaterialien oder Siliziumcarbid-Schaumstoffen, oder für die Umsetzung mit weiterem Kohlenstoff zu Kohlenstoff-Kohlenstoff-Verbunden, als Wärmedämmmaterial für hohe Temperaturen, als Katalysatorträger, als Hitzeschildmaterial in der Raumfahrt und als Gasspeichermedium.

Das pulverförmige Kohlenstoffmaterial eignet sich insbesondere als Elektrodenmaterial für Superkondensatoren und/oder in Brennstoffzellen.

Die vorliegende Erfindung soll anhand der angeführten Beispiele erläutert werden, ohne jedoch hierdurch eine entsprechende Eingrenzung vorzunehmen.

Beispiele

I. Eingesetzte Rohstoffe zur Herstellung der Kunststoff-Schaumstoffe auf Isocyanatbasis

    1. Isocyanate

        Isocyanat 1
        Polyisocyanat Lupranat® M50 (BASF), ein Gemisch aus Diphenylmethandiisocyanat und Polyphenylpolyisocyanaten mit einem NCO-Gehalt von 31,5 Gew.-% und einer Viskosität von 550 mPas bei 25°C.
        Isocyanat 2
        Polyisocyanat Lupranat® M70 (BASF), ein Gemisch aus Diphenylmethandiisocyanat und Polyphenylpolyisocyanaten mit einem NCO-Gehalt von 31 Gew.-% und einer Viskosität von 750 mPas bei 25°C.

    2. Hydroxylgruppenhaltige Verbindungen mit Esterstrukturen und Etherstrukturen, sogenannte Polyole

        Polyol 1
        Polyesteralkohol, hergestellt aus Adipinsäure / Phthalsäureanhydrid / Ölsäure im molaren Verhältnis 1 : 2 : 1 mit 1,1,1-Trimethylolpropan, mit einem Zahlenmittel der Molmasse von 530 g/mol, einer Hydroxylzahl von 385 mg KOH/g und einer Viskosität bei 75°C von 1370 mPas sowie einer mittleren Funktionalität von 3,7.
        Polyol 2
        Polyetheralkohol, hergestellt aus Glycerol als Starter mit Propylenoxid als erstem Block und Ethylenoxid als Endblock mit einer Hydroxylzahl von 35 mg KOH/g und einer Viskosität von 850 mPas bei 25°C. Das Masseverhältnis von Propylenoxid zu Ethylenoxid beträgt 6,4. Die mittlere Molmasse hat einen Wert von 4350 g/mol, die mittlere Funktionalität liegt bei 2,7.

II. Herstellung der Kunststoff-Schaumstoffe mit Isocyanuratstrukturen (Tabelle 1a und 1b)
Becherverschäumung:

    A-Komponente: Gemisch aus Polyolen, Katalysatoren, Stabilisatoren und Treibmitteln und gegebenenfalls weiteren Zusatzkomponenten. Füllstoffe können in die Polyolkomponente eingearbeitet werden.

    B-Komponente: Polyisocyanat oder Gemisch aus Polyisocyanaten. Füllstoffe können in die Isocyanatkomponente eingearbeitet werden.

A- und B-Komponente wurden auf 20°C +/- 0,5 K temperiert. Insgesamt 78 g der A- und B-Komponenten wurden in einen Pappbecher mit ca. 660 ml Rauminhalt 10 Sekunden mit einem Laborrührwerk (Drehzahl von 1750 Umdrehungen/min), versehen mit einem Rührorgan der Fa. Vollrath (Durchmesser 65 mm), vermischt. Das Verhältnis von A zu B entsprach dem der jeweiligen Formulierung. Am aufsteigenden Schaum wurden Start-, Steig- und Abbindezeit, vom ausgehärteten Schaum die Rohdichte, in den Tabellen auch als Dichte bezeichnet, gemessen.
Die Porosität errechnet sich aus der Rohdichte des Schaumstoffes Ds in kg/m3 und der Dichte des Polymermaterials von 1250 kg/m3:

$$\text{Porosität in \% = [1 - Ds/1250]} \bullet 100.$$

Die Offenzelligkeit wurde nach ASTM D 2856-87, Methode C, ermittelt.
Der Polyisocyanuratgehalt wird durch die Messung des Verhältnisses der Extinktion der Bande um 1410 cm$^{-1}$ (Isocyanu-rat) zur Bande um 1595 cm$^{-1}$ (Aromat) im mittleren Infrarotbereich an einer mit der Kaliumbromid-Presstechnik präparierten pulverisierten Probe charakterisiert und als "Ev(PIR)" angegeben.
Der Stickstoffgehalt wird aus der Formulierung errechnet und stimmt mit dem durch Elementaranalyse ermittelten Wert überein.
Tabelle 1 a: Formulierungen zur Herstellung der Kunststoff-Schaumstoffe auf Isocyanatbasis
Angaben als Masseteile
B = Becherverschäumung

M = Maschinenverschäumung: Die Vermischung der Komponenten erfolgte kontinuierlich mit der Hochdruck-Schäummaschine PUROMAT® HD 30 der Fa. Elastogran GmbH und anschließendes Auftragen über eine Gießharke auf ein Doppel-Transportband. Dieses Verfahren wird z.B. von R. Wiedermann und R. Zöllner auf den Seiten 272-273 im Kunststoff-Handbuch, Band 7, Polyurethane, herausgegeben von G. Oertel im Hanser Verlag, München, Wien, 1993, beschrieben.

Bedingungen Maschinenversuch: Austrag gesamt 15,000 kg/min. Bandgeschwindigkeit: 4,1 m/min.

Tabelle 1b (Fortsetzung von Tabelle 1a): Formulierungen zur Herstellung der Kunststoff-Schaumstoffe auf Isocyanatbasis.

| System-Nummer | 1 | 2 | 2a | 2b | 2c | 2d | 2e | 3 |
|---|---|---|---|---|---|---|---|---|
| | M | B | B | B | B | B | B | B |
| Polyol 1 | 31,0 | 25,6 | 25,6 | 25,6 | 26,6 | 26,6 | 25,6 | 25,6 |
| Polyol 2 | 45,0 | 31,6 | 31,6 | 31,6 | 31,6 | 31,6 | 31,6 | 31,6 |
| Dipropylenglykol | 18,0 | 16,7 | 16,7 | 16,7 | 16,7 | 16,7 | 16,7 | 16,7 |
| Tegostab® B8461 [1] | 1,50 | 1,30 | 1,30 | 1,30 | 1,30 | 1,30 | 1,30 | 1,30 |
| Tegostab® B8409 [1] | 1,50 | 1,30 | 1,30 | 1,30 | 1,30 | 1,30 | 1,30 | 1,30 |
| Wasser/Glycerol/ Dipropylenglykol [2] | 3,00 | | | | | | | |
| Wasser | - | 0,4 | 0,4 | 0,4 | 0,4 | 0,4 | 0,4 | 0,4 |
| Kaliumacetat/ Monoethylenglykol [3] | 5,00 | 5,00 | 5,00 | 5,00 | 5,00 | 5,00 | 5,00 | 5,00 |
| Triazin [4] | 0,50 | | | | | | | |
| Triamin [5] Copyright by Elastogran GmbH Schwarzheide PAE/E, 1996 | - | 0,3 | 0,3 | 0,3 | 0,3 | 0,3 | 0,3 | 0,3 |
| Orthegol 501 [6] | - | 1,00 | 1,00 | 1,00 | 1,00 | 1,00 | 1,00 | 1,00 |
| Calciumcarbonat | | | | 55 | | | 5 | - |
| Ammoniumpolyphosphat | | | | | | 5 | | - |
| Blähgraphit | | | 85 | | | | | - |
| Al(CH$_3$COO)$_2$OH | | | | | 5 | | | - |
| n-Pentan | 12,0 | 9,9 | 9,9 | 9,9 | 9,9 | 9,9 | 9,9 | 9,9 |

[1]) Th. Goldschmidt AG.
[2]) Zusammensetzung in Masseteilen (Tle.): 120 Tle. Wasser, 62 Tle. Dipropylenglykol, 18 Tle. Glycerol.
[3]) Zusammensetzung in Masseteilen: 54 Tle. Monoethylenglykol, 46 Tle. Kaliumacetat.
[4]) 1,3,5-Tris(3-dimethylaminopropyl)-hexahydro-s-triazin.
[5]) N,N,N,N,N-Pentamethyldiethylentriamin.
[6]) Flüssige höhermolekulare ungesättigte Kohlenwasserstoffe nach DE 4303809, Th. Goldschmidt AG.

| Nummer | 1 | 2 | 2a | 2b | 2c | 2d | 2e | 3 |
|---|---|---|---|---|---|---|---|---|
| | | | | | | | | |
| Isocyanat 1 | - | 388 | 388 | 388 | 388 | 388 | 388 | 388 |
| Isocyanat 2 | 441 | - | - | - | - | - | - | - |
| Startzeit in s | 17 | 14 | 15 | 14 | 15 | 16 | 16 | 14 |
| Abbindezeit in s | 26 | 30 | 55 | 36 | 39 | 36 | 35 | 30 |

(fortgesetzt)

| Nummer | 1 | 2 | 2a | 2b | 2c | 2d | 2e | 3 |
|---|---|---|---|---|---|---|---|---|
| Steigzeit in s | 40 | 38 | 102 | 51 | 54 | 55 | 59 | 38 |
| Rohdichte in kg/m3 | 75 | 230,2 | 103,3 | 124,5 | 100,2 | 118,7 | 107,7 | 230,2 |
| Porosität in % | 94 | 82 | 92 | 90 | 92 | 90 | 91 | 82 |
| Offenzelligkeit in % | 12 | 81,1 | 15,4 | 89,5 | 93,0 | 93,2 | 93,7 | 81,1 |
| Stickstoffgehalt in % | 8,8 | 8,9 | 8,8 | 8,1 | 8,9 | 8,9 | 8,9 | 8,9 |
| Ev(PIR) | 5,18 | 7,67 | - | 7,32 | - | 5,69 | 5,38 | 7,67 |
| Behandlung des Schaumes | | | | | | | | Tränken mit $ZnCl_2$ |

III. Herstellung der Kohlenstoff-Schaumstoffe

Zur Charakterisierung der Kohlenstoff-Schaumstoffe:

In allen Beispielen wurde der Modul-Rohrofen Typ GTF 12/50/546/E2408 CP der Firma Carbolite GmbH mit einem Quarzglasrohr mit einem Innendurchmesser von 55 mm und einer Länge von 1100 mm eingesetzt.

Die Messungen der Rohdichte und der Offenzelligkeit erfolgten analog zu den Kunststoff-Schaumstoffen.

Die Messung der Dichte des Zellgerüstmaterials (Kohlenstoff-Schaumstoff-Matrix) Dg zur Berechnung der Porosität erfolgte mittels Pyknometer.

Die Berechnung der Porosität in % wurde nach folgender Formel durchgeführt:

$$\text{Porosität in \%} = [\, 1 - Ds / Dg\,] \bullet 100.$$

Ds : Rohdichte des Kohlenstoff-Schaumstoffes in kg/$m^3$,

Dg : Dichte des Zellgerüstmaterials in kg/m3,

Diese Dichte ist die Dichte des "nanoporösen" Gerüstmaterials. Die Poren im Nanometerbereich werden bei der Angabe dieser Porosität, die sich auf die Zellen > 20 $\mu$m bezieht, nicht berücksichtigt.

Die Beurteilung der Zellstegquerschnitte erfolgte mittels Rasterelektronenmikroskopie.

Die innere Oberfläche wurde nach DIN 66 131 ermittelt (Langmuir surface area). Die Abmessungen der Poren im Zellgerüst, angegeben als Porendurchmesser und das entsprechende Porenvolumen der Poren im nm-Bereich wurden aus Messungen in Anlehnung an DIN 66 131 und Auswertung nach Langmuir / Horvath Kavazoe bestimmt.

Beispiel 1 (Vergleich)

Aus dem Kunststoff-Schaumstoff auf Isocyanatbasis, hergestellt aus dem System Nr. 1 in Tabelle 1, wurden Körper der Abmessungen 6 cm x 3,5 cm x 1,7 cm einer Masse von 2,5 g herausgesägt und in dem Modul-Rohrofen in der Mitte des Quarzglasrohres positioniert. Während des gesamten Versuches wurde ein Stickstoffstrom von 5 l/min durch das Rohr geleitet. Die Probe wurde mit einer Heizrate von 5 K/min auf 800°C erhitzt, eine Stunde bei der Maximaltemperatur Tmax 800°C belassen und mit 20 K/min auf 30°C abgekühlt. Es entstand ein rissfreier homogener Kohlenstoff-Schaumstoff der Masse 0,72 g, d.h. einer Ausbeute an Kohlenstoff-Schaumstoff von 28,8 %. Die Dichte des Kohlenstoff-Schaumstoffes lag bei 105 kg/m3, der Kohlenstoff-Gehalt lag bei 79 Gew.-%, der Stickstoffgehalt bei 9,5 % und der Wasserstoffgehalt bei 2,5 Gew.-%. Die Dichte des Gerüstmaterials betrug 1,6 g/cm3, die Porosität 92,5 %, die Offenzelligkeit 93 %..Die innere Oberfläche nach DIN 66131 wurde zu 4,1 m2/g gemessen.

Beispiel 1a (erfindungsgemäß)

Der nach Beispiel 1 hergestellte Kohlenstoff-Schaumstoff wurde erneut in dem Modul-Rohrofen in der Mitte des Quarzglasrohres positioniert. Während des gesamten Versuches wurde ein Stickstoffstrom von 5 1/min durch das Rohr geleitet. Die Probe wurde mit einer Heizrate von 5 K/min auf 800°C erhitzt, danach 30 min bei der Maximaltemperatur Tmax 800°C mit 2 1/min Stickstoff plus 1,2 l/min Wasserdampf behandelt und mit 20 K/min auf 30°C abgekühlt. Der Masseverlust betrug 16 %, bezogen auf die Masse des eingesetzten Kohlenstoff-Schaumstoffs.

Beispiel 1b (erfindungsgemäß)

Der nach Beispiel 1 hergestellte Kohlenstoff-Schaumstoff wurde erneut in dem Modul-Rohrofen in der Mitte des Quarzglasrohres positioniert. Während des Versuches wurde ein Stickstoffstrom von 5 l/min durch das Rohr geleitet. Im Temperaturintervall zwischen 300 und 500 °C wurden anstelle des Stickstoffs 5 l/min Luft durch den Ofen geleitet. Die Probe wurde mit einer Heizrate von 5 K/min weiter auf 800°C erhitzt, danach 15 min bei der Maximaltemperatur Tmax 800°C mit 2 l/min Stickstoff plus 1,2 l/min Wasserdampf behandelt und mit 20 K/min auf 30°C abgekühlt. Der Masseverlust betrug 18 %, bezogen auf die Masse des eingesetzten Kohlenstoff-Schaumstoffs.

Beispiel 1c (erfindungsgemäß)

Der Kunststoff-Schaumstoff analog Beispiel 1 wurde in dem Modul-Rohrofen in der Mitte des Quarzglasrohres positioniert. Während des Versuches wurde ein Stickstoffstrom von 5 1/min durch das Rohr geleitet. Im Temperaturintervall zwischen 650 und 750°C wurden anstelle des reinen Stickstoffs 21/min Stickstoff plus 0,44 1/min Wasserdampf durch den Ofen geleitet. Damit geschah die Wasserdampfbehandlung simultan zur Pyrolyse. Die Probe wurde bei konstant 750°C weiter 30 min in reinem Stickstoff mit 5 1/min behandelt. Der Masseverlust betrug 75,1 %, bezogen auf die Masse des eingesetzten Kunststoff-Schaumstoffs.

Beispiel 1d (erfindungsgemäß)

Der nach Beispiel 1 hergestellte Kohlenstoff-Schaumstoff wurde erneut in dem Modul-Rohrofen in der Mitte des Quarzglasrohres positioniert. Während des Versuches wurde ein Stickstoffstrom von 5 1/min durch das Rohr geleitet. Heizrate 5 K/min. Im Temperaturintervall zwischen 800 und 900°C wurden bei 2 K/min anstelle des reinen Stickstoffs 2 1/min Stickstoff plus 1 1/min Kohlendioxid durch den Ofen geleitet. Bei 900°C wurde die Temperatur 1 Stunde beim vorgenannten Gasstrom konstant gehalten. Der Masseverlust betrug 9,1 %, bezogen auf die Masse des eingesetzten Kohlenstoff-Schaumstoffs.

Beispiel 1e (erfindungsgemäß)

Der Kunststoff-Schaumstoff analog Beispiel 1 wurde in dem Modul-Rohrofen in der Mitte des Quarzglasrohres positioniert. Während des Versuches wurde ein Stickstoffstrom von 5 1/min durch das Rohr geleitet. Heizrate 5 K/min. Im Temperaturintervall zwischen 800 und 900°C wurden anstelle des reinen Stickstoffs 2 l/min Stickstoff plus 1 l/min Kohlendioxid durch den Ofen geleitet. Damit geschah die Kohlendioxidbehandlung simultan zur Pyrolyse. Bei 900°C wurde die Temperatur 1 Stunde beim vorgenannten Gasstrom konstant gehalten. Der Masseverlust betrug 74,0 %, bezogen auf die Masse des eingesetzten Kunststoff-Schaumstoffs.

Beispiel 2 (Vergleich)

Aus dem Kunststoff-Schaumstoff auf Isocyanatbasis, hergestellt aus dem System Nr. 2 in Tabelle 1, wurden Körper der Abmessungen 6 cm x 3,5 cm x 1,7 cm einer Masse von 9,2 g herausgesägt und in dem Modul-Rohrofen in der Mitte des Quarzglasrohres positioniert. Während des Versuches wurde ein Stickstoffstrom von 5 l/min durch das Rohr geleitet. Mit 3 K/min wurde auf 500°C und anschließend mit 5 K/min auf 800°C erhitzt. Haltezeit bei 800°C unter Stickstoff war 10 min. Der Masseverlust betrug 68 %, bezogen auf die Masse des eingesetzten Kunststoff-Schaumstoffs.

Beispiele 2a, 2b, 2c, 2d und 2e (erfindungsgemäß)

Diese Beispiele beschreiben die Wirkung von eingearbeiteten Füllstoffen (basisches Aluminiumacetat, Blähgraphit, Calciumcarbonat und Ammoniumpolyphosphat) auf die innere Oberfläche.
Die Kunststoff-Schaumstoffe nach den Beispielen 2a, 2b und 2c wurden aus den jeweiligen Systemen Nr. 2a bis 2c in Tabelle 1 hergestellt. Es wurden Körper der Abmessungen 6 cm x 3,5 cm x 1,7 cm herausgesägt und in dem Modul-Rohrofen in der Mitte des Quarzglasrohres positioniert. Es wurde unter 5 l/min Stickstoff mit 3 K/min auf 500°C und anschließend mit 5 K/min auf 800°C erhitzt. Haltezeit bei 800°C unter Stickstoff war 10 min. Der Masseverlust betrug 70 % (2a) bzw. 62 % (2b) bzw. 63 % (2c), bezogen auf die Masse des eingesetzten Kunststoff-Schaumstoffs.
Die Kunststoff-Schaumstoffe nach den Beispielen 2d und 2e wurden analog Beispiel 1c mit Stickstoff / Wasserdampf behandelt. Der Masseverlust betrug 69 % (2d) bzw. 72 % (2e), bezogen auf die Masse des eingesetzten Kunststoff-Schaumstoffs.

Beispiel 3 (erfindungsgemäß)

Der Kunststoff-Schaumstoff gemäß Beispiel 2 wurde mit einer 1-molaren Lösung von Zinkchlorid in Diethylether unter Vakuum getränkt, anschließend getrocknet. Auf der Oberfläche des Schaumstoffes wurden damit 34,4 Masse-% $ZnCl_2$ positioniert. Dieser so behandelte Schaumstoff wurde im Modul-Rohrofen mit 5 K/min unter 5 1/min Stickstoff auf 900°C erhitzt. Der Masseverlust betrug 68,1 %, bezogen auf die Masse des eingesetzten Kunststoff-Schaumstoffs.

Beispiel 4 (erfindungsgemäß)

Der Kunststoff-Schaumstoff auf Basis Melaminharz (Basotect® - BASF) wurde analog Beispiel 1e im Modul-Rohrofen positioniert. Während des Versuches wurde ein Stickstoffstrom von 5 l/min durch das Rohr geleitet. Die Heizrate betrug 5 K/min. Im Temperaturintervall zwischen 800 und 900°C wurden bei 2 K/min anstelle des reinen Stickstoffs 2 l/min Stickstoff plus 1 l/min Kohlendioxid durch den Ofen geleitet. Bei 900°C wurde die Temperatur 1 Stunde beim vorgenannten Gasstrom konstant gehalten. Der Masseverlust betrug 61,0 %, bezogen auf die Masse des eingesetzten Kunststoff-Schaumstoffs.

Tabelle 2: Kohlenstoff-Schaumstoffe

| Beispiel | 1 | 1a | 1b | 1c | 1d | 1e | 2 | 2a | 2b | 2c | 2d | 2e | 3 | 4 |
|---|---|---|---|---|---|---|---|---|---|---|---|---|---|---|
| Verwendeter Schaum aus Tab. 1a/1b | 1 | 1 | 1 | 1 | 1 | 1 | 2 | 2a | 2b | 2c | 2d | 2e | 2 | - |
| Dichte des Kohlenstoff-Schaumstoffes in kg/m$^3$ | 105 | 74 | 72 | 68 | 83 | 81 | 265 | 95 | 117 | 110 | 132 | 10 | 120 | 15 |
| Porosität in % | 93 | 95 | 95 | 95 | 95 | 95 | 83 | 94 | 93 | 93 | 92 | 93 | 93 | 99 |
| Dichte der C-Schaum-Matrix in g/cm$^3$ | 1,60 | 1,46 | 1,48 | 1,45 | 1,56 | 1,58 | 1,60 | 1,60 | 1,60 | 1,60 | 1,58 | 1,58 | 1,70 | 1,60 |
| Oberfläche nach DIN 66 131 in m2/g | 4,1 | 793 | 905 | 559 | 1015 | 649 | 2,4 | 128 | 55 | 57 | 571 | 394 | 131 | 685 |
| Abmessung der Poren im Zellgerüst als Porenradius in nm | - | 4,5 | 10,3 | 2,5 | 1,32 | 1,29 | - | 2,5 | 3,0- | 4,5 | 6,5 | 7,5- | 4,0 | 10,5 |
| Porenvolumen der Poren im Zellgerüst in cm$^3$/g | - | 0,53 | 0,6 | 0,55 | 0,41 | 0,20 | - | 0,15 | 0,2 | 0,3 | 0,4 | 0,5 | 0,2 | 0,5 |

Bei den Vergleichsbeispielen liegen die inneren Oberflächen der Kohlenstoff-Schaumstoffe weit unter dem erfindungsgemäßen Wert von 50 m2/g, so dass sich eine Analyse nach Porengrößen und -volumen erübrigt.

**Patentansprüche**

1. Verfahren zur Herstellung eines mindestens zu 70 Gew.-% aus Kohlenstoff bestehenden Schaumstoffes durch Pyrolyse von Kunststoff-Schaumstoffen, **dadurch gekennzeichnet, dass** die eingesetzten Kunststoff-Schaumstoffe mindestens 30 Masse-% eines Polymermaterials mit einem Stickstoffgehalt über 6 Masse-% enthalten und eine Porosität zwischen 35 % und 99,5 % sowie eine Offenzelligkeit über 1 % besitzen, in den Kunststoff-Schaumstoff eingearbeitet und/oder auf die Oberfläche aufgebracht Anorganika, ausgewählt aus der Gruppe, enthaltend Zinkchlorid, Calciumcarbonat, Ammoniumpolyphosphat, Blähgraphit und Metallpulver, aufweisen und/oder während und/oder nach der Pyrolyse mit Wasserdampf und/oder Kohlendioxid bei Temperaturen über 400°C behandelt werden.

2. Verfahren gemäß Anspruch 1, **dadurch gekennzeichnet, dass** die eingesetzten Kunststoff-Schaumstoffe Harnstoff-Formaldehydharze sind oder enthalten.

3. Verfahren gemäß Anspruch 1, **dadurch gekennzeichnet, dass** die eingesetzten Kunststoff-Schaumstoffe Melamin-Formaldehydharze sind oder enthalten.

4. Verfahren gemäß Anspruch 1, **dadurch gekennzeichnet, dass** die eingesetzten Kunststoff-Schaumstoffe polymere Isocyanataddukte sind oder enthalten.

5. Verfahren gemäß Anspruch 1 oder 4, **dadurch gekennzeichnet, dass** die eingesetzten polymeren Isocyanataddukte Polyisocyanuratstrukturen enthalten, die charakterisiert werden durch ein relatives Verhältnis Ev der Extinktion der nach Präparation mit der Kaliumbromid-Presstechnik registrierten Isocyanurat-Bande im mittleren Infrarotbereich um 1410 cm$^{-1}$ zur Extinktion der Aromaten-Bande um 1600 cm$^{-1}$ von größer 1,5.

6. Verfahren gemäß einem der Ansprüche 1 oder 4 bis 5, **dadurch gekennzeichnet, dass** die eingesetzten polymeren Isocyanataddukte hergestellt werden durch Umsetzung von Polyisocyanaten mit sich selbst, wasserstoffaktive Gruppen enthaltenden Verbindungen oder weiteren mit Isocyanat reagierenden Verbindungen unter Verwendung von Katalysatoren, Stabilisatoren, Treibmitteln und gegebenenfalls weiteren Hilfsstoffen.

7. Verfahren gemäß einem der Ansprüche 1 oder 4 bis 6, **dadurch gekennzeichnet, dass** als wasserstoffaktive Gruppen enthaltende Verbindungen hydroxylgruppenhaltige Polymerisationsprodukte einer Molmasse größer 200 g/mol und einer Funktionalität größer 1 eingesetzt werden.

8. Verfahren gemäß einem der Ansprüche 1 oder 4 bis 7, **dadurch gekennzeichnet, dass** als wasserstoffaktive Gruppen enthaltende Verbindungen Polyesterole auf der Basis von aromatischen Polycarbonsäuren und mehrfunktionellen Alkoholen eingesetzt werden.

9. Verfahren gemäß einem der Ansprüche 1 oder 4 bis 8, **dadurch gekennzeichnet, dass** die weiteren mit Isocyanat reagierenden Verbindungen organische Säureanhydridstrukturen enthalten.

10. Verfahren gemäß einem der Ansprüche 1 oder 4 bis 7, **dadurch gekennzeichnet, dass** die weiteren mit Isocyanat reagierenden Verbindungen Epoxidstrukturen enthalten.

11. Verfahren gemäß einem der Ansprüche 1 oder 4 bis 10, **dadurch gekennzeichnet, dass** als Katalysator mindestens eine Verbindung mit Kronenetherstrukturen eingesetzt wird.

12. Verfahren gemäß einem der Ansprüche 1 bis 11, **dadurch gekennzeichnet, dass** neben den eingesetzten Kunststoff-Schaumstoffen noch nicht ausgehärtete Phenolharzkomponenten mitverwendet werden.

13. Verfahren gemäß einem der Ansprüche 1 bis 12, **dadurch gekennzeichnet, dass** bei der Herstellung der eingesetzten Kunststoff-Schaumstoffe anorganische Salze, Metallpulver oder Blähgraphit als Füllstoffe in einer Menge von 0,1 Masse-% bis 60 Masse-%, bezogen auf die Gesamtmasse der Kunststoff-Schaumstoffe, eingesetzt werden.

**14.** Verfahren gemäß einem der Ansprüche 1 bis 13, **dadurch gekennzeichnet, dass** die eingesetzten Kunststoff-Schaumstoffe mit Lösungen oder Dispersionen anorganischer Salze, Metallpulver oder Blähgraphit in Wasser oder organischen Lösungsmitteln derart getränkt werden, dass nach dem Abdampfen der Lösungsmittel eine Menge von 0,1 Masse-% bis 60 Masse-% der Anorganika auf dem Schaumstoff verbleibt.

**15.** Verfahren gemäß einem der Ansprüche 1 bis 14, **dadurch gekennzeichnet, dass** die eingesetzten anorganischen Salze Zinkchlorid und/oder Calciumcarbonat und/oder Ammoniumpolyphosphat sind.

**16.** Verfahren gemäß einem der Ansprüche 1 bis 15, **dadurch gekennzeichnet, dass** die Pyrolyse der Kunststoff-Schaumstoffe durch Erhitzen von Raumtemperatur auf über 500°C und oberhalb von 500°C bis zu einer Temperatur von 3000°C erfolgt.

**17.** Verfahren gemäß einem der Ansprüche 1 bis 16, **dadurch gekennzeichnet, dass** bei der Pyrolyse das Erhitzen mit Heizraten von 0,05 K/min bis 10 K/min erfolgt.

**18.** Verfahren gemäß einem der Ansprüche 1 bis 17, **dadurch gekennzeichnet, dass** die Pyrolyse der Kunststoff-Schaumstoffe in einer Atmosphäre von Stickstoff und/oder Edelgasen erfolgt.

**19.** Verfahren gemäß einem der Ansprüche 1 bis 18, **dadurch gekennzeichnet, dass** die Pyrolyse der Kunststoff-Schaumstoffe durch Erhitzen von Raumtemperatur bis zu einer Temperatur zwischen 400°C und 1200°C in Stickstoff und/oder Edelgas und bei Temperaturen darüber mit 0,5 Vol.-% bis zu 80 Vol.-% Wasserdampf im Wasserdampfgemisch mit Stickstoff und/oder Edelgas durchgeführt wird.

**20.** Verfahren gemäß einem der Ansprüche 1 bis 19, **dadurch gekennzeichnet, dass** die Pyrolyse der Kunststoff-Schaumstoffe durch Erhitzen von Raumtemperatur bis zu einer Temperatur zwischen 400°C und 1500°C in Stickstoff und/oder Edelgas und bei Temperaturen darüber mit über 1 Vol.-% Kohlendioxid in einem Gemisch von Kohlendioxid und Stickstoff und/oder Edelgas durchgeführt wird.

**21.** Verfahren gemäß einem der Ansprüche 1 bis 18, **dadurch gekennzeichnet, dass** die Pyrolyse der Kunststoff-Schaumstoffe durch Erhitzen von Raumtemperatur bis zu einer Temperatur zwischen 400°C und 1500°C in Stickstoff und/oder Edelgas und bei Temperaturen darüber in Kohlendioxid durchgeführt wird.

**22.** Verfahren gemäß einem der Ansprüche 1 bis 18, **dadurch gekennzeichnet, dass** zunächst der mindestens zu 70 Gew.-% aus Kohlenstoff bestehende Schaumstoff durch Pyrolyse in Stickstoff und/oder Edelgas hergestellt und anschließend bei über 500°C mit 1 Vol.-% bis zu 80 Vol.-% Wasserdampf im Wasserdampfgemisch mit Stickstoff und/oder Edelgas behandelt wird.

**23.** Verfahren gemäß einem der Ansprüche 1 bis 18, **dadurch gekennzeichnet, dass** zunächst der mindestens zu 70 Gew.-% aus Kohlenstoff bestehende Schaumstoff durch Pyrolyse in Stickstoff und/oder Edelgas hergestellt und anschließend bei über 500°C mit über 1 Vol.-% Kohlendioxid in einem Gemisch aus Kohlendioxid mit Stickstoff und/ oder Edelgas behandelt wird.

**24.** Verfahren gemäß einem der Ansprüche 1 bis 18, **dadurch gekennzeichnet, dass** zunächst der mindestens zu 70 Gew.-% aus Kohlenstoff bestehende Schaumstoff durch Pyrolyse in Stickstoff und/oder Edelgas hergestellt und anschließend bei über 500°C mit Kohlendioxid behandelt wird.

**25.** Verfahren gemäß einem der Ansprüche 1 bis 24, **dadurch gekennzeichnet, dass** die Pyrolyse der Kunststoff-Schaumstoffe unter Anwesenheit von Sauerstoff in einer Menge von 0,05 Vol.-% bis 30 Vol.-%, bezogen auf die Gesamtgasmenge, im Temperaturbereich von Raumtemperatur bis 1500°C erfolgt.

**26.** Verfahren gemäß einem der Ansprüche 1 bis 25, **dadurch gekennzeichnet, dass** während der Pyrolyse oder der Nachbehandlung des mindestens zu 70 Gew.-% aus Kohlenstoff bestehenden Schaumstoffes die Durchleitung der Gasströme in einer Geschwindigkeit von 0,01 Liter pro Stunde bis 10 Liter pro Minute und Gramm Schaumstoff erfolgt.

**Claims**

**1.** A process for producing a foam comprising at least 70% by weight of carbon by pyrolysis of polymer foams which comprise at least 30% by mass of a polymer material having a nitrogen content of more than 6% by mass and having a porosity of from 35% to 99.5% and an open cell content above 1%, have inorganics selected from the group consisting of zinc chloride, calcium carbonate, ammonium polyphosphate, expanded graphite and metal powders incorporated into the polymer foam and/or applied to the surface and/or are treated during and/or after the pyrolysis with water vapor and/or carbon dioxide at above 400°C.

2.  The process according to claim 1, wherein the polymer foams used are or comprise urea-formaldehyde resins.

3.  The process according to claim 1, wherein the polymer foams used are or comprise melamine-formaldehyde resins.

4.  The process according to claim 1, wherein the polymer foams used are or comprise polymeric isocyanate adducts.

5.  The process according to claim 1 or 4, wherein the polymeric isocyanate adducts used contain polyisocyanurate structures which have a ratio $A_r$ of the absorbance of the isocyanurate band in the middle infrared region at about 1410 cm$^{-1}$ recorded using the pressed potassium bromide pellet technique after preparation to the absorbance of the aromatic bands at about 1600 cm$^{-1}$ of greater than 1.5.

6.  The process according to any of claims 1 or 4 to 5, wherein the polymeric isocyanate adducts used are prepared by reacting polyisocyanates with themselves, with compounds containing hydrogen-active groups or with further compounds which react with isocyanate in the presence of catalysts, stabilizers, blowing agents and, if desired, further auxiliaries.

7.  The process according to any of claims 1 or 4 to 6, wherein hydroxyl-containing polymerization products having a molar mass of greater than 200 g/mol und a functionality of greater than 1 are used as compounds containing hydrogen-active groups.

8.  The process according to any of claims 1 or 4 to 7, wherein polyesterols based on aromatic polycarboxylic acids and polyfunctional alcohols are used as compounds containing hydrogen-active groups.

9.  The process according to any of claims 1 or 4 to 8, wherein the further compounds which react with isocyanate contain organic acid anhydride structures.

10. The process according to any of claims 1 or 4 to 7, wherein the further compounds which react with isocyanate contain epoxide structures.

11. The process according to any of claims 1 or 4 to 10, wherein at least one compound having a crown ether structure is used as catalyst.

12. The process according to any of claims 1 to 11, wherein as yet uncured phenolic resin components are employed in addition to the polymer foams used.

13. The process according to any of claims 1 to 12, wherein inorganic salts, metal powders or expanded graphite are used as fillers in the preparation of the polymer foams used in an amount of from 0.1% by mass to 60% by mass, based on the total mass of the polymer foams.

14. The process according to any of claims 1 to 23, wherein the polymer foams used are impregnated with solutions or dispersions of inorganic salts, metal powders or expanded graphite in water or organic solvents in such a way that an amount of from 0.1% by mass to 60% by mass of the inorganics remains on the foam after evaporation of the solvent.

15. The process according to any of claims 1 to 14, wherein the inorganic salts used are zinc chloride and/or calcium carbonate and/or ammonium polyphosphate.

16. The process according to any of claims 1 to 15, wherein the pyrolysis of the polymer foams is carried out by heating from room temperature to over 500°C and above 500°C to a temperature of 3000°C.

17. The process according to any of claims 1 to 16, wherein heating is carried out at heating rates of from 0.05 K/min to 10 K/min during the pyrolysis.

**18.** The process according to any of claims 1 to 17, wherein the pyrolysis of the polymer foams is carried out in an atmosphere of nitrogen and/or noble gases.

**19.** The process according to any of claims 1 to 18, wherein the pyrolysis of the polymer foams is carried out by heating from room temperature to a temperature in the range from 400°C to 1200°C in nitrogen and/or noble gas and at higher temperatures in a mixture of water vapor with nitrogen and/or noble gas containing from 0.5% by volume to 80% by volume of water vapor.

**20.** The process according to any of claims 1 to 19, wherein the pyrolysis of the polymer foams is carried out by heating from room temperature to a temperature in the range from 400°C to 1500°C in nitrogen and/or noble gas and at higher temperatures in a mixture of carbon dioxide and nitrogen and/or noble gas containing over 1% by volume of carbon dioxide.

**21.** The process according to any of claims 1 to 18, wherein the pyrolysis of the polymer foams is carried out by heating from room temperature to a temperature in the range from 400°C to 1500°C in nitrogen and/or noble gas and at higher temperatures in carbon dioxide.

**22.** The process according to any of claims 1 to 18, wherein the foam comprising at least 70% by weight of carbon is firstly produced by pyrolysis in nitrogen and/or noble gas and is subsequently treated at above 500°C with a mixture of water vapor and nitrogen and/or noble gas containing from 1% by volume to 80% by volume of water vapor.

**23.** The process according to any of claims 1 to 18, wherein the foam comprising at least 70% by weight of carbon is firstly produced by pyrolysis in nitrogen and/or noble gas and is subsequently treated at above 500°C with a mixture of carbon dioxide and nitrogen and/or noble gas containing over 1% by volume of carbon dioxide.

**24.** The process according to any of claims 1 to 18, wherein the foam comprising at least 70% by weight of carbon is firstly produced by pyrolysis in nitrogen and/or noble gas and is subsequently treated at above 500°C with carbon dioxide.

**25.** The process according to any of claims 1 to 24, wherein the pyrolysis of the polymer foams is carried out in the temperature range from room temperature to 1500°C in the presence of oxygen in an amount of from 0.05% by volume to 30% by volume, based on the total amount of gas.

**26.** The process according to any of claims 1 to 25, wherein the flow rate of the gas streams during the pyrolysis or the after-treatment of the foam comprising at least 70% by weight of carbon is from 0.01 liter per hour to 10 liters per minute and gram of foam.

**Revendications**

**1.** Procédé de préparation d'une mousse constituée de carbone pour au moins 70 % en poids par pyrolyse de mousses en substance synthétique, **caractérisé en ce que** les mousses en substance synthétique mises en oeuvre contiennent au moins 30 % en poids d'une matière polymère ayant une teneur en azote supérieure à 6 % en poids et possèdent une porosité entre 35 % et 99,5 % ainsi qu'un pourcentage d'alvéoles ouvertes supérieur à 1 %, présentent à l'état incorporé dans la mousse de substance synthétique et/ou à l'état appliqué sur la surface des substances inorganiques choisies parmi le groupe comprenant du chlorure de zinc, du carbonate de calcium, du polyphosphate d'ammonium, du graphite expansé et de la poudre métallique et/ou sont traitées pendant et/ou après la pyrolyse avec de la vapeur d'eau et/ou du dioxyde de carbone à des températures supérieures à 400°C.

**2.** Procédé suivant la revendication 1, **caractérisé en ce que** les mousses de substance synthétique mises en oeuvre sont ou contiennent des résines d'urée-formaldéhyde.

**3.** Procédé suivant la revendication 1, **caractérisé en ce que** les mousses de substance synthétique mises en oeuvre sont ou contiennent des résines de mélamine-formaldéhyde.

**4.** Procédé suivant la revendication 1, **caractérisé en ce que** les mousses de substance synthétique mises en oeuvre sont ou contiennent des produits d'addition d'isocyanate polymères.

**5.** Procédé suivant la revendication 1 ou 4, **caractérisé en ce que** les produits d'addition d'isocyanate polymères mis en oeuvre contiennent des structures polyisocyanurate qui sont **caractérisées par** un rapport relatif Ev entre l'extinction de la bande d'isocyanurate dans la zone infrarouge centrale de 1410 cm$^{-1}$, qui est enregistrée après préparation avec la technique de pressage au bromure de potassium, et l'extinction de la bande des substances aromatiques de 1600 cm$^{-1}$ qui est supérieur à 1,5.

**6.** Procédé suivant l'une des revendications 1 ou 4 et 5, **caractérisé en ce que** les produits d'addition d'isocyanate polymères mis en oeuvre sont préparés par réaction de polyisocyanates avec des composés contenant eux-mêmes des groupes actifs concernant l'hydrogène ou d'autres composés réagissant avec de l'isocyanate, en utilisant des catalyseurs, des agents stabilisants, des agents moussants et éventuellement d'autres adjuvants.

**7.** Procédé suivant l'une des revendications 1 ou 4 à 6, **caractérisé en ce que**, comme composés contenant des groupes actifs concernant l'hydrogène, on met en oeuvre des produits de polymérisation contenant des groupes hydroxyle d'un poids moléculaire supérieur à 200 g/mole et d'une fonctionnalité supérieure à 1.

**8.** Procédé suivant l'une des revendications 1 ou 4 à 7, **caractérisé en ce que**, comme composés contenant des groupes actifs concernant l'hydrogène, on met en oeuvre des polyestérols à base d'acides polycarboxyliques aromatiques et d'alcools plurifonctionnels.

**9.** Procédé suivant l'une des revendications 1 ou 4 à 8, **caractérisé en ce que** les autres composés réagissant avec de l'isocyanate contiennent des structures d'anhydride d'acide organique.

**10.** Procédé suivant l'une des revendications 1 ou 4 à 7, **caractérisé en ce que** les autres composés réagissant avec de l'isocyanate contiennent des structures d'époxyde.

**11.** Procédé suivant l'une des revendications 1 ou 4 à 10, **caractérisé en ce que**, comme catalyseur, on met en oeuvre au moins un composé présentant des structures d'éther en couronne.

**12.** Procédé suivant l'une des revendications 1 à 11, **caractérisé en ce que**, à côté des mousses de substance synthétique mises en oeuvre, on utilise conjointement des composants de résine phénolique qui n'ont pas encore durci.

**13.** Procédé suivant l'une des revendications 1 à 12, **caractérisé en ce que**, lors de la préparation des mousses de substance synthétique mises en oeuvre, on met en oeuvre des sels inorganiques, des poudres métalliques ou du graphite expansé comme charges en une quantité de 0,1 % en poids à 60 % en poids, par rapport à la masse totale des mousses de substance synthétique.

**14.** Procédé suivant l'une des revendications 1 à 13, **caractérisé en ce que** les mousses de substance synthétique mises en oeuvre sont imprégnées par des solutions ou dispersions de sels inorganiques, de poudres métalliques ou de graphite expansé dans l'eau ou dans des solvants organiques de façon que, après l'évaporation du solvant, il subsiste sur la mousse une quantité de 0,1 % en poids à 60 % en poids des substances inorganiques.

**15.** Procédé suivant l'une des revendications 1 à 14, **caractérisé en ce que** les sels inorganiques mis en oeuvre sont du chlorure de zinc et/ou du carbonate de calcium et/ou du polyphosphate d'ammonium.

**16.** Procédé suivant l'une des revendications 1 à 15, **caractérisé en ce que** la pyrolyse des mousses de substance synthétique a lieu par chauffage de la température ambiante à plus de 500°C et au-dessus de 500°C jusqu'à une température de 3 000°C.

**17.** Procédé suivant l'une des revendications 1 à 16, **caractérisé en ce que**, lors de la pyrolyse, le chauffage a lieu à des vitesses de chauffage de 0,05 K/min à 10 K/min.

**18.** Procédé suivant l'une des revendications 1 à 17, **caractérisé en ce que** la pyrolyse des mousses de substance synthétique a lieu dans une atmosphère d'azote et/ou de gaz noble.

**19.** Procédé suivant l'une des revendications 1 à 18, **caractérisé en ce que** la pyrolyse des mousses de substance synthétique est effectuée par chauffage de la température ambiante jusqu'à une température comprise entre 400°C et 1 200°C dans de l'azote et/ou un gaz noble et à des températures supérieures à cela avec 0,5 % en volume jusqu'à 80 % en volume de vapeur d'eau dans un mélange de vapeur d'eau avec de l'azote et/ou du gaz noble.

**20.** Procédé suivant l'une des revendications 1 à 19, **caractérisé en ce que** la pyrolyse des mousses de substance synthétique est effectuée par chauffage de la température ambiante jusqu'à une température comprise entre 400°C et 1 500°C dans de l'azote et/ou du gaz noble et à des températures supérieures à cela avec plus de 1 % en volume de dioxyde de carbone dans un mélange de dioxyde de carbone et d'azote et/ou de gaz noble.

**21.** Procédé suivant l'une des revendications 1 à 18, **caractérisé en ce que** la pyrolyse des mousses de substance synthétique est effectuée par chauffage de la température ambiante jusqu'à une température comprise entre 400°C et 1 500°C dans de l'azote et/ou du gaz noble et à des températures supérieures à cela dans du dioxyde de carbone.

**22.** Procédé suivant l'une des revendications 1 à 18, **caractérisé en ce que** la mousse constituée d'au moins 70 % en poids de carbone est tout d'abord préparée par pyrolyse dans de l'azote et/ou du gaz noble et ensuite traitée à plus de 500°C avec 1 % en volume jusqu'à 80 % en volume de vapeur d'eau dans un mélange de vapeur avec de l'azote et/ou du gaz noble.

**23.** Procédé suivant l'une des revendications 1 à 18, **caractérisé en ce que** tout d'abord la mousse constituée d'au moins 70 % en poids de carbone est préparée par pyrolyse dans de l'azote et/ou du gaz noble et est ensuite traitée à plus de 500°C avec plus de 1 % en volume de dioxyde de carbone dans un mélange de dioxyde de carbone et d'azote et/ou de gaz noble.

**24.** Procédé suivant l'une des revendications 1 à 18, **caractérisé en ce que** tout d'abord la mousse constituée d'au moins 70 % en poids de carbone est préparée par pyrolyse dans de l'azote et/ou du gaz noble et est ensuite traitée à plus de 500°C avec du dioxyde de carbone.

**25.** Procédé suivant l'une des revendications 1 à 24, **caractérisé en ce que** la pyrolyse des mousses de substance synthétique a lieu en présence d'oxygène en une quantité de 0,05 % en volume à 30 % en volume, par rapport à la quantité totale de gaz, dans la gamme de températures allant de la température ambiante à 1 500°C.

**26.** Procédé suivant l'une des revendications 1 à 25, **caractérisé en ce que**, pendant la pyrolyse ou le traitement postérieur de la mousse constituée d'au moins 70 % en poids de carbone, le passage des courants gazeux a lieu à une vitesse de 0,01 litre par heure jusqu'à 10 litres par minute et gramme de mousse.